# EUROPÄISCHE PATENTSCHRIFT

(11) **EP 1 238 944 B1**
(45) Veröffentlichungstag und Bekanntmachung des Hinweises auf die Patenterteilung: **18.10.2006**
(21) Anmeldenummer: 02004986.2
(22) Anmeldetag: 06.03.2002
(51) Int. Cl.: C01B 21/092

(54) **Verfahren zur Herstellung von Lithiumamid**
Process for the preparation of lithium amide
Procédé pour la production l'amidure de lithium

(30) Priorität: 09.03.2001 DE 10111725
(43) Veröffentlichungstag der Anmeldung: 11.09.2002
(73) Patentinhaber: Chemetall GmbH, 60487 Frankfurt (DE)
(72) Erfinder: Weiss, wilfried, 61440 Oberursel (DE); Dawidowski, Dirk, 60439 Frankfurt (DE)
(74) Vertreter: Uppena, Franz

(56) Entgegenhaltungen:
- US-A- 3 542 512
- US-A- 3 917 602
- US-A- 4 206 191
- US-A- 5 486 343
- DATABASE WPI Section Ch, Week 198012 Derwent Publications Ltd., London, GB; Class E34, AN 1980-21840C XP002204752 & SU 674 976 A (UNIV CHUVASH), 28. Juli 1979 (1979-07-28)

## Beschreibung

Die Erfindung betrifft ein Verfahren zur Herstellung von Lithiumamid.

Lithiumamid ist eine starke Base. Sie findet häufig Verwendung als Reagenz in der synthetischen organischen Chemie, z.B. bei Kondensations- oder Alkylierungs-Reaktionen (*Encyclopedia of Reagents for Organic Synthesis*, Vol. 5, 3031, L.A. Paquette, John Wiley **1995**).

Übliche Herstellverfahren sehen vor, das Lithiummetall in flüssigem Ammoniak (T < - 33 °C) zu lösen und anschließend unter Katalyse einer Übergangsmetallverbindung (z.B. Eisen-III-nitrat: Gmelin, Lithium, Ergänzungsband 20, 279) zum Lithiumamid umzusetzen. Von Nachteil ist das Arbeiten bei tiefen Temperaturen und die Bildung von Wasserstoff.

Bekannt ist auch die Umsetzung von Lithiummetall und gasförmigem Ammoniak bei Temperaturen über 400 °C. Von Nachteil ist die hohe Temperatur und die Bildung von Wasserstoff.

Die US 5486343 beschreibt ein Verfahren zu Herstellung von Lithiumamid, bei dem Lithiummetall in einem Lösungsmittel mit Ammoniak zu Lithiumbronze umgesetzt wird und anschließend die Lithiumbronze thermisch unter Bildung von Lithiumamid, Wasserstoff und Ammoniak zersetzt wird. Von Nachteil ist auch hier der freiwerdende Wasserstoff.

Aufgabe der Erfindung ist es, die Nachteile des Standes der Technik zu überwinden und insbesondere ein Verfahren zur Herstellung von Lithiumamid zu schaffen, bei dem kein Wasserstoff freigesetzt wird und das möglichst bei Raumtemperatur arbeitet.

Die Aufgabe wird gelöst durch ein Verfahren zur Herstellung von Lithiumamid, bei dem in einem 1. Verfahrensschritt Lithiummetall mit Ammoniak zu Lithiumbronze umgesetzt wird und in einem 2. Verfahrensschritt die Lithiumbronze in Gegenwart eines Lösungsmittels mit einem 1,3-Dien oder einem Arylolefin umgesetzt wird:

Li + 4 NH₃ → Li(NH₃)₄

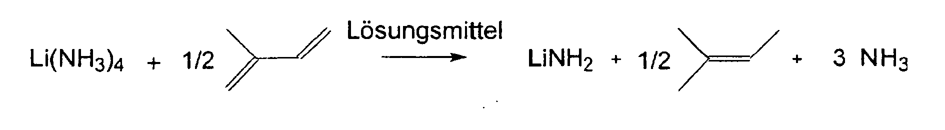

Bevorzugte 1,3-Diene, bzw. Arylolefine sind Butadien, Isopren, Piperylen, Dimethylbutadien, Hexadien, Styrol, Methylstyrol, Naphthalin oder Anthracen:

Der 1. Reaktionsschritt kann ohne Lösungsmittel durchgeführt werden. Bevorzugt wird jedoch auch im 1. Reaktionsschritt in einem Lösungsmittel gearbeitet. Als Lösungsmittel werden bevorzugt acyclische oder cyclische aliphatische Kohlenwasserstoffe, aromatische Kohlenwasserstoffe oder Ether oder Gemische dieser Stoffe eingesetzt. Beispiele für Lösungsmittel sind Pentan, Cyclopentan, Hexan, Heptan, Octan, Cyclohexan, Toluol, Xylol, Cumol, Ethylbenzol, Tetralin, Diethylether, Tetrahydrofuran (THF), 2-Methyl-THF, Tetrahydropyran, Diisopropylether, Dibutylether, Dioxan, Methyl-tert-butylether oder Glycolether. Beim Einsatz von THF als alleinigem Lösungsmittel beim 1. Reaktionsschritt ist zu beachten, dass das THF einer langsamen Zersetzungsreaktion unterliegen kann, wobei sich Ethen und Lithiumethenolat bilden.

Eine bevorzugte Reaktionstemperatur für beide Reaktionsschritte liegt zwischen 0 und 30 °C.

Die Reaktionswärme im 1. Reaktionsschritt lässt sich z.B. über die Dosiergeschwindigkeit des Ammoniaks kontrollieren. Bei Einsatz eines Lösungsmittels im 1. Reaktionsschritt kann die Wärme über das Lösungsmittel durch Mantelkühlung abgeführt werden. Die gebildete Lithiumbronze schwimmt dann auf dem Lösungsmittel auf und kann zur Reinigung abgetrennt und bei Bedarf gelagert und transportiert werden.

Die Reaktionswärme im 2. Reaktionsschritt lässt sich z.B. über die Dosiergeschwindigkeit des 1,3 Diens oder Arylolefins kontrollieren. Das gebildete Lithiumamid ist unlöslich und schwerer als die Reaktionslösung. Das hydrierte 1,3 Dien, bzw. Arylolefin löst sich im Lösungsmittel, der Ammoniak entweicht gasförmig und kann zurückgewonnen werden. Das pulverförmige Lithiumamid wird vom Lösungsmittel abgetrennt und bei Bedarf getrocknet.

Von Vorteil des erfindungsgemäßen Verfahrens ist, dass die Reaktion bei Raumtemperatur durchgeführt werden kann (womit des Produkt keiner thermischen Belastung ausgesetzt ist), dass das Produkt von großer Reinheit ist (Verunreinigungen können mit dem Lösungsmittel abgetrennt werden), dass kein Wasserstoff entsteht und dass der Ammoniak, der ja frei von Wasserstoff ist, zurückgewonnen werden kann.

Die Erfindung wird im folgenden anhand von Beispielen näher erläutert.

### Beispiel 1: Herstellung von Lithiumbronze in Hexan

In einem 500-ml-Doppelmantelreaktor wurden bei 20 °C 1,39 g Lithium-Granulat (0,2 mol) in 150 ml Hexan vorgelegt. Der Ammoniak (0,8 mol, ca. 20 Liter) wurde in dem Maße eingeleitet, dass dieser absorbiert wurde und möglichst nicht entwich. Der Reaktionsstart war durch die freiwerdende Lösungswärme und durch die Verfärbung der Lithiumoberfläche von silbrig nach bronzefarben zu erkennen. Die entstehende Reaktionswärme wurde über die Mantelkühlung abgeführt. Als alles Lithium zur Lithiumbronze verflüssigt war (nach ca. 3 Stunden), wurde die Ammoniakzugabe beendet. Erhalten wurde ein flüssiges 2-phasiges Solvenssystem, bei dem die kupferfarbene Lithiumbronze oben aufschwamm.

### Beispiel 2: Herstellung von Li-amid mit Styrol

Zu dem 2-phasigen System von 0,2 mol Lithiumbronze in 150 ml Hexan aus Beispiel 1 wurden bei einer Temperatur von 20 °C 11,5 ml (0,1 mol) Styrol innerhalb von 115 Minuten zudosiert. Unter Wärmetönung entstanden Li-amid und 0,6 mol NH₃ (ca. 15 l), welcher kontinuierlich freigesetzt wurde. Der Reaktionsansatz wurde nachgerührt, bis keine Lithiumbronze mehr aufschwamm. Das hellgraue Li-amid sedimentierte bei Rührerstillstand zu Boden, die überstehende Hexanlösung war farblos und klar. Der Reaktionsansatz wurde über G-3 filtriert und mit 3 x 20 ml Hexan nachgewaschen, der Filterrückstand im Ölpumpenvakuum bei Raumtemperatur getrocknet. Das Lithiumamid wurde als 5,5 g weißes Pulver gewonnen, die isolierte Ausbeute lag bei 98 %, die Reinheit bei 97,5 %.

### Beispiel 3: Herstellung von Lithiumbronze in Diethylether

Analog Beispiel 1 wurden 2,36 g Lithium-Granulat (0,34 mol) in 250 ml Diethylether bei 20 °C mit 1,36 mol NH3 (ca. 33 l) innerhalb von 2 Stunden und 15 min umgesetzt. Die Lithiumbronze schwamm sehr sauber oben auf.

### Beispiel 4: Herstellung von Li-amid mit Isopren

Analog Beispiel 2 wurden zu dem 2-phasigen System von 0,34 mol Lithiumbronze in 250 ml Diethylether aus Beispiel 3 innerhalb von 3 Stunden bei 20 °C 17 ml Isopren (0,17 mol) zudosiert. Dabei wurden 1,02 mol (ca. 24,4 l) NH₃ frei. Das entstehende Lithiumamid fiel hellgrau aus, wurde abfiltriert und im Ölpumpenvakuum getrocknet. Erhalten wurden 7,8 g reines Lithiumamid mit einer Reinheit von > 99 %.

## Patentansprüche

1. Verfahren zur Herstellung von Lithiumamid, **dadurch gekennzeichnet, dass** in einem 1. Verfahrensschritt Lithiummetall mit Ammoniak zu Lithiumbronze umgesetzt wird und
in einem 2. Verfahrensschritt die Lithiumbronze in Gegenwart eines Lösungsmittels mit einem 1,3-Dien oder einem Arylolefin umgesetzt wird.

2. Verfahren nach Anspruch 1, **dadurch gekennzeichnet, dass** das 1,3-Dien oder das Arylolefin Butadien, Isopren, Piperylen, Dimethylbutadien, Hexadien, Styrol, Methylstyrol, Naphthalin oder Anthracen ist.

3. Verfahren nach Anspruch 1 oder 2, **dadurch gekennzeichnet, dass** im 2. Reaktionsschritt eine zur Lithiumbronze stöchiometrische Menge 1,3-Dien oder Arylolefin eingesetzt wird.

4. Verfahren nach einem der Ansprüche 1 bis 3, **dadurch gekennzeichnet, dass** auch der 1. Verfahrensschritt in Gegenwart eines Lösungsmittels durchgeführt wird.

5. Verfahren nach einem der Ansprüche 1 bis 4, **dadurch gekennzeichnet, dass** als jeweiliges Lösungsmittel ein acyclischer oder cyclischer aliphatischer Kohlenwasserstoff, ein aromatischer Kohlenwasserstoff oder ein Ether oder ein Gemisch dieser Stoffe eingesetzt wird.

6. Verfahren nach Anspruch 5, **dadurch gekennzeichnet, dass** als Lösungsmittel Pentan, Cyclopentan, Hexan, Heptan, Octan, Cyclohexan, Toluol, Xylol, Cumol, Ethylbenzol, Tetralin, Diethylether, (Tetrahydrofuran (THF), 2-Methyl-THF, Tetrahydropyran, Diisopropylether, Dibutylether, Dioxan, Methyl-tert-butylether, Glycolether oder ein Gemisch dieser Stoffe eingesetzt wird.

7. Verfahren nach einem der Ansprüche 1 bis 6, **dadurch gekennzeichnet, dass** beide Verfahrensschritte bei Temperaturen von 0 bis 30 °C durchgeführt werden.

8. Verfahren nach einem der Ansprüche 1 bis 7, **dadurch gekennzeichnet, dass** der freiwerdende Ammoniak zurückgewonnen wird.

## Claims

1. A method for preparing lithium amide, **characterized in that** in a first method step lithium metal is reacted with ammonia to form lithium bronze and in a second method step the lithium bronze is reacted with a 1,3-diene or an arylolefin in the presence of a solvent.

2. A method according to claim 1, **characterized in that** the 1,3-diene or the arylolefin is butadiene, isoprene, piperylene, dimethylbutadiene, hexadiene, styrene, methyl styrene, naphthalene or anthracene.

3. A method according to claim 1 or 2, **characterized in that** a stoichiometric quantity of 1,3-diene or arylolefin in relation to the lithium bronze is used in the second reaction step.

4. A method according to one of claims 1 to 3, **characterized in that** the first method step is also carried out in the presence of a solvent.

5. A method according to one of claims 1 to 4, **characterized in that** an acyclic or cyclic aliphatic hydrocarbon, an aromatic hydrocarbon or an ether or a mixture of these substances is used as the respective solvent.

6. A method according to claim 5, **characterized in that** pentane, cyclopentane, hexane, heptane, octane, cyclohexane, toluene, xylene, cumene, ethyl benzene, tetralin, diethyl ether, tetrahydrofuran (THF), 2-methyl-THF, tetrahydropyrane, diisopropyl ether, dibutyl ether, dioxan, methyl-tert-butyl ether, glycol ether or a mixture of these substances is used as the solvent.

7. A method according to one of claims 1 to 6, **characterized in that** both method steps are carried out at temperatures of 0 to 30°C.

8. A method according to one of claims 1 to 7, **characterized in that** the ammonia that is released is reclaimed.

## Revendications

1. Procédé pour la préparation d'amidure de lithium, **caractérisé en ce que**
dans une première étape du procédé on fait réagir du lithium métallique avec de l'ammoniac pour obtenir du bronze de lithium et
dans une seconde étape du procédé on fait réagir le bronze de lithium avec un 1,3-diène ou une aryloléfine en présence d'un solvant.

2. Procédé selon la revendication 1, **caractérisé en ce que** le 1,3-diène ou l'aryloléfine est le butadiène, l'isoprène, le pipérylène, le diméthylbutadiène, l'hexadiène, le styrène, le méthylstyrène, le naphtalène ou l'anthracène.

3. Procédé selon la revendication 1 ou 2, **caractérisé en ce que** dans l'étape 2 on utilise une quantité stoechiométrique, par rapport au bronze de lithium, de 1,3-diène ou d'aryloléfine.

4. Procédé selon l'une quelconque des revendications 1 à 3, **caractérisé en ce que** la première étape du procédé est effectuée en présence d'un solvant.

5. Procédé selon l'une quelconque des revendications 1 à 4, **caractérisé en ce qu'**on utilise comme solvant respectif un hydrocarbure aliphatique cyclique ou acyclique, un hydrocarbure aromatique ou un éther ou un mélange de ces substances.

6. Procédé selon la revendication 5, **caractérisé en ce qu'**on utilise comme solvant le pentane, le cyclopentane, l'hexane, l'heptane, l'octane, le cyclohexane, le toluène, le xylène, le cumène, l'éthylbenzène, la Tétraline, l'oxyde d'éthyle, le tétrahydrofuranne (THF), le 2-méthyl-THF, le tétrahydropyranne, l'éther diisopropylique, l'éther dibutylique, le dioxanne, l'oxyde de méthyle et de tert-butyle, l'éther de glycol ou un mélange de ces substances.

7. Procédé selon l'une quelconque des revendications 1 à 6, **caractérisé en ce que** les deux étapes du procédé sont effectuées à des températures de 0 à 30°C.

8. Procédé selon l'une quelconque des revendications 1 à 7, **caractérisé en ce que** l'ammoniac libéré est récupéré.
